# EUROPEAN PATENT SPECIFICATION

(11) **EP 3 081 977 B1**
(45) Date of publication and mention of the grant of the patent: **12.06.2024**
(21) Application number: 15163792.3
(22) Date of filing: 16.04.2015
(51) Int. Cl.: G02B 21/36

(54) **MICROSCOPIC IMAGE CONTROLLER DEVICE FOR A MICROSCOPE, MICROSCOPE, AND MICROSCOPING METHOD**
VORRICHTUNG ZUR KONTROLLE VON MIKROSKOPISCHEN BILDERN FÜR EIN MIKROSKOP, MIKROSKOP UND MIKROSKOPIEVERFAHREN
DISPOSITIF DE CONTRÔLE D'IMAGE MICROSCOPIQUE POUR UN MICROSCOPE, MICROSCOPE ET PROCÉDÉ DE MICROSCOPIE

(43) Date of publication of application: 19.10.2016
(73) Proprietor: Leica Instruments (Singapore) Pte. Ltd., 608924 Singapore (SG)
(72) Inventor: Schnitzler, Harald, 9450 Lüchingen (CH)
(74) Representative: Grünecker Patent- und Rechtsanwälte PartG mbB

(56) References cited:
- EP-A1- 1 729 162
- EP-A1- 2 840 429
- JP-A- H11 298 790
- US-A1- 2006 171 023
- US-A1- 2012 069 171

## Description

The invention relates to a microscopic image controller device for a microscope, a microscope, and a microscoping method.

Microscopes, in particular digital microscopes, using advanced image processing methods are already known. These methods often require that more than one image is taken and the at least two images are processed together to produce a single, enhanced output image. One such multi-image process is for example the so-called z-stacking in which several pictures of different focus planes are combined to increase the depth of field in the output image. Other such processes are known as iris fusion, HDR (high dynamic range) or anti-glare.

In practice, working with a microscope using multi-image processing may be cumbersome due to a slow content frame rate which is indicative of the time between subsequent updates of the images presented to a user. Further more, these image processing methods are increasing the wear of the microscope, as mechanical and electrical parts are more or less continuously activated, which also adds to environmental noise generated by the microscope.

In order to provide a solution which facilitates the use of the microscope, which reduces the wear of the microscope, and which nonetheless provides the user with the enhanced images generated by multi-image processing methods, a microscopic image controller device for a microscope comprises an input section for receiving at least subsequent sets of input image data, each set representing a microscopic image, and an output section for outputting sets of output image data, each set representing a microscopic image, wherein the microscopic image controller device is adapted to automatically switch from a first to a second image processing mode if an amount of change between at least two subsequent sets of input image data is below a threshold, and wherein, in the second image processing mode, the sets of output image data are based on a greater number of subsequent sets of input image data than in the first image processing mode, and wherein as the threshold an absolute threshold is used by using a reference set of image data.

The object is further achieved by a microscope comprising a display for displaying subsequent sets of display data, each set representing a microscopic image, and a camera for providing subsequent sets of input image data sets, each set representing a microscopic image, and optionally in addition at least one sensor device for acquiring subsequent settings data representing at least one variable configuration parameter of the microscope, wherein the microscope is adapted to operate in a first and second image processing mode depending on an amount of change in the input image data, wherein, in the second image processing mode, each set of display data is based on a greater number of image data than in the first image processing mode.

Further, the object is achieved by a microscoping method for automatically generating subsequent sets of output image data from subsequent sets of input image data, each set of input image data representing a microscopic image, each set of output image data representing a microscopic image, wherein the number of subsequent sets of input image data used for generating subsequent ones of the sets of output image data changes automatically if at least two subsequent sets of input image data changes by an amount which is below a threshold, and wherein as the threshold for the automatic changing an absolute threshold is used by using a reference set of image data.

The solutions allow an easy operation of the microscope as it automatically switches from a first image processing mode in which less images are used to produce an output image, to a second image processing mode, in which more images are used to produce an output image. Making the changeover between the two modes dependent on an amount of change in the input images allows to use the enhanced pictures automatically in situations, where the captured images change slowly or not at all. Thus, the devices and method according to the invention automatically use the image processing mode which is best suited for the image change rate at hand. Making the changeover between the two modes depending on subsequent settings data representing variable configuration parameters of the microscope such as illumination, change of focus, movement of the table or change of focal length allows to use enhanced image processing automatically if the microscope is at rest and a still picture is to be expected.

The switching can be automatic if the amount of change is below a threshold.

EP1729162A1 shows a microscope with a camera in which the imaging mode of the camera is settable depending on changes of the settings of the microscope, EP 2 840 429 A1 shows a microscope in which the rate with which the output images are displayed can be lower than the rate with which the images are taken. US 2012/0069171 A1 discloses an imaging device for a microscope with a movement detection unit.

It is the object of the invention to provide a solution that improves the performance.

This is achieved when an absolute threshold is used by using a reference set of image and/or settings data.

Due to this, it is avoided that a series of sub-threshold changes goes unnoticed.

The inventive solution can further be developed and improved with the embodiments, which are independent of each other and can be combined arbitrarily as desired.

The microscopic image controller device can be adapted to switch from the second image processing mode to the first image processing mode depending on an amount of change between at least one of at least two subsequent sets of input image data and/or at least two subsequent settings data. In this embodiment, the switching back to the first image processing mode depends also on an amount of change in the input image data and/or the settings data. For example, if these data change rapidly, the devices and the method according to the invention use automatically a less time-consuming image processing method, to be able to quickly see the changes in the output image data.

Computational criteria for switching from the first image processing mode to the second image processing mode can differ from computational criteria for switching from the second image processing mode to the first image processing mode. For example, switching from the first to the second image processing mode can be based on subsequent sets of input image data, whereas the switching from the second to the first mode can be based on subsequent settings data. Moreover, different thresholds for the change in subsequent image and/or settings data may be used. For example, the threshold for switching from the first to the second image processing mode can be lower than the threshold for switching from the second to the first mode. In addition or alternatively, an absolute threshold may be used by using a reference set of image and/or settings data. The reference set may be time-varying, e.g. by defining a reference set every pre-determined number of subsequent image and/or settings data or after a defined time period has elapsed. Using an absolute threshold instead or in addition to a threshold which applies to two consecutive sets of data avoids that a series of sub-threshold changes goes unnoticed.

In particular, it can be necessary for switching from the first image processing mode to the second image processing mode that no change or only a very small change is determined for a certain time span. When switching back from the second image processing mode to the first image processing mode, no such time span can be provided and the switching can take place as soon as a change is determined.

The amount of change may be determined using correlation methods between two sets of data, comparison of statistics of image data such as histograms, average brightness, data from white balance and so on. Determining the amount of change may also include determining a rate of change in the settings and/or image data and switching to the second image processing mode only if there is no or a sub-threshold rate of change.

The first image processing mode can be a single-image processing mode with little or no image processing or alteration. It can be, in particular, a live video mode that allows for example to adjust the sample with a high frame rate, for instance with at least 25 frames or pictures per second. In such a configuration, the sample can be adjusted or moved to the right place in the first image processing mode. Subsequently, the microscope automatically switches to the second image processing mode when no change or movement is detected, because the adjustment has been finished.

In the second image processing mode at least one multi-image processing method can be employed. This can be for example iris fusion, in which an advancement of the depth of field is achieved by combining several images that were taken with a different aperture, z-stacking, in which an enhancement of the depth of field is achieved by combining several pictures with a different focal length, HDR (high dynamic range) in which several images taken with different light intensity are combined, or anti-glare, in which several pictures are combined that were taken with different directions of the lighting. The mentioned methods require the variation of at least one parameter that is relevant for the image. Thus, when using these methods, a switching from the second image processing mode back to the first image processing mode should not be based on a change in the relevant parameters or a change in the image. Rather, in this case, the switching from the second to the first image processing mode should for example be based on a signal from a movement detector attached to the sample. As an alternative, the switching could be performed automatically after a certain time has elapsed or if all the images that are relevant for the multi-image process have been taken. However, advanced algorithms that can check whether the sample has moved based on input image data even when a parameter is varied might also be used.

Which multi-image process is used could for example be chosen by a user. The user can for example turn on or off certain processes that should or should not be used. The user could also select which of the processes should be used. Further, which process should be used could be chosen by an algorithm. Such an algorithm could for example analyze an image and determine which process is the most adequate one for the current situation.

The amount of change between subsequent sets of input image data can be computed with an image processing algorithm. Such an image processing algorithm can for example compare subsequent sets of input image data, for instance by a simple subtraction, and give a value that indicates how big a change is. The image processing algorithm can further work by means of a correlation or with other, more sophisticated or more complex methods for detecting a change in subsequent sets of input image and data. The computation of an amount of change with an image processing algorithm can in particular be performed for the switching from the first to the second image processing mode. In the reverse direction, a simpler method can be used, for example, the detection of a movement by a sensor.

Preferably, for a switching, the amount of change has to exceed a programmed threshold. Thus, a predetermined amount of change can be required for the switching. The switching can hence be threshold dependent. For example, two subsequent values could be compared and the switching could be dependent on the difference of these values. Of course, two non-subsequent values can be used too. Further, it could be checked whether a value does not exceed a certain maximum and/or minimum value for a defined time. A threshold can be definable so that for different settings, different values can be used for switching. In particular, a small change in the order of the noise level can be tolerated so that switching is also performed if only noise is detected. Such noise can for example be due to electronic readout or vibrations.

The input and/or the output section can be either hardware components like ports or plugs which for example allow the microscopic image controller device to be attached to an existing microscope or they can be virtual, for example as part of a processor or processing unit or as part of a software product so that an existing microscope can be retro-fitted easily. The input and/or output section can be adapted to be connected to a bus system used in a digital microscope.

Preferably, in the second image processing mode, the microscope is adapted to automatically provide subsequent sets of input image data wherein at least one of the subsequent sets of input image data is generated with at least one configuration parameter varied with respect to at least one other of the subsequent sets of input image data. Such a configuration parameter can for example be the aperture, a lighting intensity or lighting direction, a focal plane or the like. This allows in particular to use multi-image processing in an automated manner.

The microscope can comprise more than one display. It can for example comprise one display for images from the first image processing mode and one display for images from the second image processing mode.

The invention is not limited to directly subsequent sets of image data or settings data. One could also skip sets of image data or settings data and switch depending on an amount of a change in sets of image data or settings data that are further apart. For example, a second set could be several sets behind a first set.

A content presentation rate in which newly calculated output image data are displayed and which is lower than the frame rate, in which the display is updated independently of the image data provided to it, can be lower in the second image processing mode than in the first image processing mode. This allows the user to adjust the sample with fast feedback in the first image processing mode and to examine the sample in more detail in the second image processing mode.

A content frame rate for capturing input image data can be lower in the second image processing mode than in the first image processing mode. Thus, during the first image processing mode, the sample can be observed better.

The inventive microscopic method can comprise the monitoring of actuators of the microscope and/or of peripheral devices of the microscope. Such actuators or peripheral devices can be used for the aperture, the lighting, for focusing or for detecting a movement of the sample or the like.

The microscope can further comprise more than one camera. For example, one camera could be used for the first image processing mode and a second camera could be used for the second image processing mode. In such an example, the devices and method according to the invention switches between the two cameras depending on an amount of change in the input image data of, for example, the first camera.

The invention also relates to a computer medium comprising software for performing the method.

The invention will now be described with reference to advantageous embodiments in an exemplary manner. The further developments and features are each advantageous on their own and can be combined arbitrarily as desired.

In the figures:
- Fig. 1 is a schematic drawing of an embodiment of a microscopic image controller device in a microscope;
- Fig. 2 shows a schematic flow chart of an embodiment of an inventive microscoping method;
- Fig. 3 shows the microscopic method of Fig. 2 with an additional depiction of some subsections.

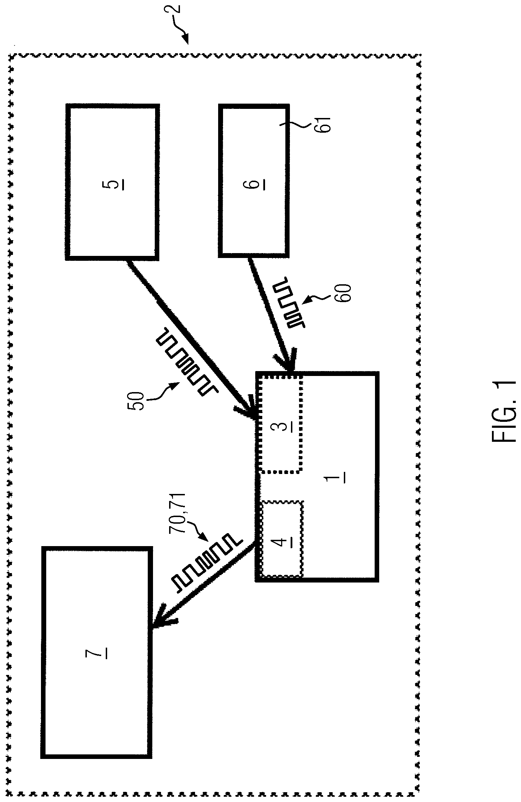

In Fig. 1 , a microscopic image controller device 1 is depicted together with other parts of a microscope 2. Such a microscopic image controller device 1 can be a part that can be added to an existing microscope or it can be part of a microscope 2. It can in particular be an inseparable part of a microscope 2.

The microscope 2 shown in Fig. 1 comprises a camera 5 for providing subsequent sets of input image data 50, each set representing a microscopic image. The camera 5 can in particular comprise a frame grabber for capturing sets of input image data 50 that represents a microscopic image, for example a CCD chip or the like. The microscope 2 further comprises at least one sensor device 6 for acquiring subsequent sets of settings data 60 representing at least one variable configuration parameter 61 of the microscope 2. Such a sensor device 6 can for example detect the state of an aperture, of lighting units or of a focusing element. The microscope 2 further comprises a display 7 for displaying subsequent sets of display data 71, each set representing a microscopic image. The microscope 2 can of course comprise more than one display 7.

The microscopic image controller device 1 comprises an input section 3 for receiving subsequent sets of input image data 50 from the camera 5, each set representing a microscopic image, and subsequent settings data 60 from the sensor device 6, representing at least one variable configuration parameter of the microscope 2.

The microscopic image controller device 1 further comprises an output section 4 for outputting sets of output image data 70, each set representing a microscopic image. In this case, the output image data 70 are display data 70 which can be displayed on the display 7 so that a user can see an image. In other applications, the output section 4 could also be connected to other parts, for example a hard drive for saving the output image data 70 without showing the image to the user.

The microscopic image controller device 1 is adapted to switch from a first image processing mode 110 to a second image processing mode 120 depending on an amount of change between at least one of at least two subsequent sets of input image data 50 and/or at least two subsequent settings data 60. In the second image processing mode 120, the sets of output image data 70 are based on a greater number of subsequent sets of input image data 50 than in the first image processing mode 110. Thus, the microscopic image controller device 1 can automatically switch from the first image processing mode 110 to the second image processing mode 120 if an amount of change indicates that for instance the sample is not moving. As long as the sample is still moving and a change can still be detected, the first image processing mode 110 will be used. Once a change is small enough or no change is present, the second image processing mode 120 can be used. The second image processing mode 120 can give a more detailed output image and/or an output image with better properties like a greater depth of field. The second image processing mode 120 can be in particular a multi-image processing mode in which at least two subsequent sets of input image data 50 representing images in which a certain parameter is varied are combined to a single set of output image data 70. The microscopic image controller device 1 can for example use focus stacking, iris-fusion, HDR or anti-glare algorithms in which the focal length, the aperture, the lighting intensity or the lighting direction are different for the subsequent sets of input image data 50.

The first image processing mode can be for example a live image or live video mode in which little or no alteration of the sets of input image data 50 takes place before it is output. The sets of output image data 70 can thus substantially correspond to the sets of input image data 50. The first image processing mode 110 can be in particular adapted for a high frame rate so that the pictures are taken and displayed at a high frame rate, thus allowing the user to move for example the sample with sufficiently fast visual feedback. The frame rate in the first image processing mode can be for example 25 frames per second or higher meaning that at least 25 pictures are taken and displayed. The microscopic image controller device 1 is also adapted to switch from the second image processing mode 120 to the first image processing mode 110 depending on an amount of change between at least one of two subsequent sets of input image data 50 and at least two subsequent settings data 60. Thus, if a change is detected, the microscopic image controller device 1 will switch back to the first image processing mode 110. If such a change is in particular detected while a series of images is being taken in the second image processing mode 120 and the series is not yet completed, the microscopic image controller device 1 can be adapted to discard the result of the second image processing mode 120 and not display it to the user or save it to a disc as this output image will be of inferior quality and have artifacts.

When switching from the first image processing mode 110 to the second image processing mode 120, different computational criteria like different methods or thresholds can be used than for the reverse situation. For example, the first switching can be based on the sets of input image data 50 and the second switching can be based on data from sensor devices 6. This is particularly important if for the second image processing mode 120 a parameter is varied for taking a series of images, as the sets of input image data 50 in this case necessarily differ from each other. In particular, it can be necessary for switching from the first image processing mode 110 to the second image processing mode 120 that no change or only a very small change is determined for a certain time span. When switching back from the second image processing mode 120 to the first image processing mode 110, no such time span can be provided and the switching can take place as soon as a change is determined.

The amount of change between subsequent sets of input image data 50 can be computed with an image processing algorithm, at least when the device is in the first image processing mode 120. Such an image processing algorithm could be very simple and only compare the at least two sets of input image data 50 by a simple subtraction. Of course, more sophisticated methods are also possible. For example, a correlation between two subsequent sets of input image data 50 could be calculated and a value indicating the amplitude of the change could be output. Whether such a change is big enough to be relevant for the image can be defined by setting a threshold.

A predetermined amount of change can be required for the switching. The switching can be threshold dependent. A certain threshold can be defined or be definable by a user. If a variable representing the amount of change is lower than the threshold, the second image processing mode 120 is activated (or maintained if is already active). If the value is higher than the threshold, the second image processing mode 120 is deactivated and/or the microscopic image controller device 1 is switched to the first image processing mode 110 (or the first image processing mode 110 is maintained). Such a variable could, for example, be achieved by comparing a present value with a preceding value. As an alternative or in addition, an interval could be defined or be definable so that the microscopic image controller device 1 does not switch to the first image processing mode 110 as long as a value representative for the amount of change is within the interval.

The microscope of Fig. 1 automatically switches from the first image processing mode 110 to the second image processing mode 120 if no change or a very small change is detected. In particular, such a small change might be in the order of the noise level so that switching is also performed if only noise is detected. Such noise can for example be due to electronic readout of vibrations. Subsequently, a series of images is automatically captured with a variation in at least one parameter that is relevant for the image, for example by stepwise opening an aperture, by varying the focus or by varying the intensity or the direction of the light.

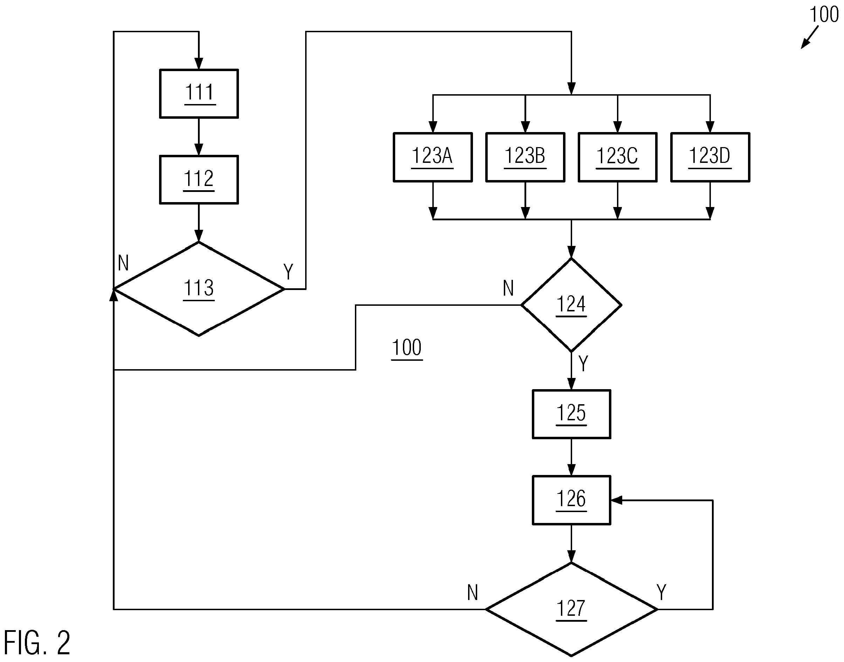

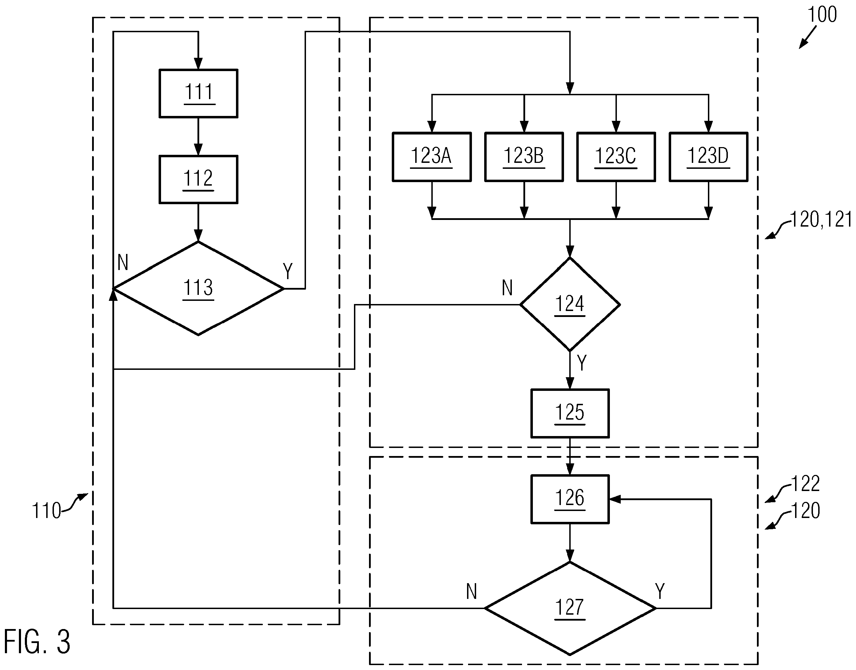

In Figs. 2 and 3 , a microscoping method 100 according to the invention is shown. In Fig. 3 , certain parts of the microscoping method 100 are indicated by additional frames.

The steps on the left-hand side in the frame relate to the first image processing mode 110. The steps on the right hand side with the two frames 121 and 122 related to the second image processing mode 120.

The first image processing mode 110 comprises a first step 111 in which an image is captured, for instance with a camera 5. In a second step 112, this image is sent to the display 7. In a third step 113, the just captured image is compared to the subsequent image. This is done digitally by applying an algorithm on the sets of input image data 50 representing the images. If this image is not identical to a subsequent image or the change is big enough, the first step 111 will again be performed and a further image will be taken. If the image is identical to the subsequent image or if a change is small enough so as not be relevant, the microscopic image controller device 1 will be automatically switched to the second image processing mode 120 and a series of images will be taken with a variation in a parameter in one of the steps 123A, 123B, 123C, or 123D. Possible multi-image processes could be iris fusion 123A, z-stacking 123B, HDR (high dynamic range) 123C, or anti-glare 123D. Which of these processes is used, can be set by the user. The user can for example turn on or off certain processes that should or should not be used. The user could also select which of the processes should be used. Further, which process should be used could be chosen by an algorithm. Such an algorithm could for example analyze an image and determine which process is the most adequate one for the current situation. Of course, more than one process 123A, 123B, 123C, or 123D can be performed. In the subsequent step 124, it is checked whether the multi-image processing 123A, 123B, 123C or 123D was successful. In case the multi-image process 123A, 123B, 123C or 123D was not successful, for example because the sample moved when the series of images was taken, the microscopic image controller device 1 will be set back to the first image processing mode 110 and an image will be taken in step 111. In case the multi-image process 123A, 123B, 123C or 123D was successful, the image will be sent to the display 7 in a further step 125. A movement of the sample is subsequently further checked by taking a picture in step 126 which is in the subsequent step 127 compared to a previous image. If the two are identical, step 126 is performed again and another image is kept and compared to the preceding image in step 127. In case the two images are not identical or a value indicates that an amount of change is above a threshold, the microscopic image controller device 1 is automatically set back to the first image processing mode 110 and a further image is taken in step 111.

In Figs. 2 and 3 , the switching between the first and the second image processing mode 110, 120 depends on an amount of change in the image itself. However, the switching can, as an alternative or in addition, also depend on an amount of change in parameters that are relevant for the image. In particular, such parameters could be the aperture, a focus plane, a lighting direction, a lighting intensity or simply a movement detected by an additional sensor.
- 1: Microscopic image controller device
- 2: Microscope
- 3: Input section
- 4: Output section
- 5: Camera
- 6: Sensor device
- 7: Display
- 50: Set of input image data
- 60: Settings data
- 61: Configuration parameter
- 70: Output image data
- 71: Display data
- 100: Microscoping method
- 110: First image processing mode
- 111: First step
- 112: Second step
- 113: Third step
- 120: Second image processing mode
- 121: Part of second image processing mode
- 122: Part of second image processing mode
- 123A: Iris fusion
- 123B: z-stacking
- 123C: HDR
- 123D: Anti-glare
- 124: Step
- 125: Step
- 126: Step
- 127: Step

## Claims

1. A microscopic image controller device (1) for a microscope (2), the microscopic image controller device (1) comprising:
• an input section (3) adapted for receiving at least:
- subsequent sets of input image data (50), each set representing a microscopic image,
• an output section (4) for outputting sets of output image data (70), each set representing a microscopic image,
wherein the microscopic image controller device (1) is adapted to automatically switch from a first image processing mode (110) to a second image processing mode (120) if an amount of change between at least two subsequent sets of input image data (50) is below a threshold, and
wherein, in the second image processing mode (120), the sets of output image data (70) are based on a greater number of subsequent sets of input image data (50) than in the first image processing mode (110), and
• wherein as the threshold an absolute threshold is used by using a reference set of image data (50, 60).

2. A microscopic image controller device (1) according to claim 1, wherein the microscopic image controller device (1) is adapted to switch from the second image processing mode (120) to the first image processing mode (110) depending on an amount of change between at least one of:
- at least two subsequent sets of input image data (50) and/or
- at least two subsequent settings data (60); wherein
the subsequent settings data (60) represents at least one variable configuration parameter of the microscope (2).

3. A microscopic image controller device (1) according to claim 2, wherein computational criteria for switching from the first image processing mode (110) to the second image processing mode (120) differ from computational criteria for switching from the second image processing mode (120) to the first image processing mode (110).

4. A microscopic image controller device (1) according to one of claims 1 to 3, wherein the amount of change between subsequent sets of input image data (50) is computed with an image processing algorithm.

5. A microscopic image controller device (1) according to claim 2, wherein, for switching from the second image processing mode to the first image processing mode, the amount of change has to exceed a programmed threshold.

6. A microscopic image controller device (1) according to one of claims 1 to 5, wherein he first image processing mode (110) is a single-image mode, in particular a live video mode, especially with at least 25 frames per second.

7. A microscopic image controller device (1) according to one of claims 1 to 6, wherein in the second image processing mode (120) a multi-image processing method is employed.

8. A microscopic image controller device (1) according to one of claims 1 to 7, wherein the input section (3) and/or the output section (4) are hardware components in particular ports or plugs.

9. A microscopic image controller device (1) according to one of claims 1 to 8, wherein the reference set is time-varying by defining a reference set every predetermined number of subsequent image and/or settings data or after a defined time period has elapsed.

10. A microscope (2) comprising:
• A microscope image controller device (1) according to one of claims 1 to 9;
• a display (7) for displaying subsequent sets of display data (71), each set representing a microscopic image,
- a camera (5) for providing subsequent sets of input image data (50), each set representing a microscopic image, and optionally in addition
- at least one sensor device (6) for acquiring subsequent settings data (60) representing at least one variable configuration parameter (61) of the microscope (2).

11. A microscope (2) according to claim 10, wherein, in the second image processing mode (120), the microscope (2) is adapted to automatically provide subsequent sets of input image data (50) wherein at least one of the subsequent sets of input image data (50) is generated with at least one configuration parameter (61) varied with respect to at least one other of the subsequent sets of input image data (50).

12. A microscope (2) according to claim 10 or claim 11, wherein a content presentation rate for displaying output image data (70) on the display (7) is lower in the second image processing mode (120) than in the first image processing mode (110).

13. A microscope (2) according to one of claims 10 to 12, comprising a first and a second camera (7), wherein the first camera (7) is used for the first image processing mode (110) and the second camera (7) is used for the second image processing mode (120).

14. A microscoping method (100) for automatically generating subsequent sets of output image data (70) from subsequent sets of input image data (50),
- each set of input image data (50) representing a microscopic image,
- each set of output image data (70) representing a microscopic image,
• wherein the number of subsequent sets of input image data (50) used for generating subsequent ones of the sets of output image data (70) changes automatically if
- at least two subsequent sets of input image data (50) changes by an amount which is below a threshold, and
• wherein as the threshold for the automatic changing an absolute threshold is used by using a reference set of image data (50, 60).

15. A microscoping method (100) according to claim 14, wherein the microscoping method (100) comprises the monitoring of actuators of the microscope (2) and/or peripheral devices of the microscope (2).

16. A microscoping method (100) according to claim 14 or 15, wherein the reference set is time-varying by defining a reference set every predetermined number of subsequent image or after a defined time period has elapsed.

17. A computer medium comprising software for performing the method according to one of claims 14-16.

## Patentansprüche

1. Mikroskopbild-Steuergerätvorrichtung (1) für ein Mikroskop (2), wobei die Mikroskopbild-Steuergerätvorrichtung (1) umfasst:
• einen Eingabeabschnitt (3), angepasst zum Empfangen von wenigstens:
- aufeinander folgenden Sätzen von Eingabebilddaten (50), wobei jeder Satz ein Mikroskopbild darstellt,
- einen Ausgabeabschnitt (4) zum Ausgeben von Sätzen von Ausgabebilddaten (70), wobei jeder Satz ein Mikroskopbild darstellt,
wobei die Mikroskopbild-Steuergerätvorrichtung (1) zum automatischen Wechseln vom ersten Bildverarbeitungsmodus (110) zu einem zweiten Bildverarbeitungsmodus (120) angepasst ist, wenn eine Änderungsmenge zwischen wenigstens zwei aufeinander folgenden Sätzen von Eingabebilddaten (50) unter einer Schwelle liegt, und
wobei im zweiten Bildverarbeitungsmodus (120) die Sätze von Ausgabebilddaten (70) auf einer größeren Zahl von aufeinander folgenden Sätzen von Eingabebilddaten (50) als im ersten Bildverarbeitungsmodus (110) basieren, und
• wobei als die Schwelle eine absolute Schwelle durch Verwenden eines Referenzsatzes von Bilddaten (50, 60) verwendet wird.

2. Mikroskopbild-Steuergerätvorrichtung (1) nach Anspruch 1, wobei die Mikroskopbild-Steuergerätvorrichtung (1) zum Wechseln vom zweiten Bildverarbeitungsmodus (120) zum ersten Bildverarbeitungsmodus (110) angepasst ist, abhängig von einer Änderungsmenge zwischen wenigstens einem Element der Gruppe umfassend:
- wenigstens zwei aufeinander folgende Sätze von Eingabebilddaten (50) und/oder
- wenigstens zwei aufeinander folgende Einstellungsdaten (60), wobei die aufeinander folgenden Einstellungsdaten (60) wenigstens einen variablen Konfigurationsparameter des Mikroskops (2) darstellen.

3. Mikroskopbild-Steuergerätvorrichtung (1) nach Anspruch 2, wobei sich Berechnungskriterien zum Wechseln vom ersten Bildverarbeitungsmodus (110) zum zweiten Bildverarbeitungsmodus (120) von Berechnungskriterien zum Wechseln vom zweiten Bildverarbeitungsmodus (120) zum ersten Bildverarbeitungsmodus (110) unterscheiden.

4. Mikroskopbild-Steuergerätvorrichtung (1) nach einem der Ansprüche 1 bis 3, wobei die Änderungsmenge zwischen aufeinander folgenden Sätzen von Eingabebilddaten (50) mit einem Bildverarbeitungsalgorithmus berechnet wird.

5. Mikroskopbild-Steuergerätvorrichtung (1) nach Anspruch 2, wobei zum Wechseln vom zweiten Bildverarbeitungsmodus zum ersten Bildverarbeitungsmodus die Änderungsmenge eine programmierte Schwelle überschreiten muss.

6. Mikroskopbild-Steuergerätvorrichtung (1) nach einem der Ansprüche 1 bis 5, wobei der erste Bildverarbeitungsmodus (110) ein Einzelbildmodus, insbesondere ein Livevideomodus, vor allem mit wenigstens 25 Frames pro Sekunde, ist.

7. Mikroskopbild-Steuergerätvorrichtung (1) nach einem der Ansprüche 1 bis 6, wobei im zweiten Bildverarbeitungsmodus (120) ein Mehrbild-Verarbeitungsverfahren verwendet wird.

8. Mikroskopbild-Steuergerätvorrichtung (1) nach einem der Ansprüche 1 bis 7, wobei der Eingabeabschnitt (3) und/oder der Ausgabeabschnitt (4) Hardwarekomponenten in bestimmten Anschlüssen oder Steckverbindungen sind.

9. Mikroskopbild-Steuergerätvorrichtung (1) nach einem der Ansprüche 1 bis 8, wobei der Referenzsatz durch Definieren eines Referenzsatzes jede vorbestimmte Zahl von aufeinander folgenden Bild- und/oder Einstellungsdaten oder nach Verstreichen eines definierten Zeitraums zeitlich variierend ist.

10. Mikroskop (2), umfassend:
• eine Mikroskopbild-Steuergerätvorrichtung (1) nach einem der Ansprüche 1 bis 9,
• eine Anzeige (7) zum Anzeigen von aufeinander folgenden Sätzen von Anzeigedaten (71), wobei jeder Satz ein Mikroskopbild darstellt,
- eine Kamera (5) zum Liefern von aufeinander folgenden Sätzen von Eingabebilddaten (50), wobei jeder Satz ein Mikroskopbild darstellt, und optional zusätzlich
- wenigstens eine Sensorvorrichtung (6) zum Erfassen von aufeinander folgenden Einstellungsdaten (60) zur Darstellung von wenigstens einem variablen Konfigurationsparameter (61) des Mikroskops (2).

11. Mikroskop (2) nach Anspruch 10, wobei im zweiten Bildverarbeitungsmodus (120) das Mikroskop (2) zum automatischen Liefern von aufeinanderfolgenden Sätzen von Eingabebilddaten (50) angepasst ist, wobei wenigstens einer der aufeinander folgenden Sätze von Eingabebilddaten (50) mit wenigstens einem Konfigurationsparameter (61), variiert in Bezug auf wenigstens einen anderen der aufeinander folgenden Sätze von Eingabebilddaten (50), erzeugt wird.

12. Mikroskop (2) nach Anspruch 10 oder Anspruch 11, wobei eine Inhaltsdarstellungsrate zum Anzeigen von Ausgabebilddaten (70) auf der Anzeige (7) im zweiten Bildverarbeitungsmodus (120) niedriger ist als im ersten Bildverarbeitungsmodus (110).

13. Mikroskop (2) nach einem der Ansprüche 10 bis 12, umfassend eine erste und eine zweite Kamera (7), wobei die erste Kamera (7) für den ersten Bildverarbeitungsmodus (110) verwendet wird und die zweite Kamera (7) für den zweiten Bildverarbeitungsmodus (120) verwendet wird.

14. Mikroskopierverfahren (100) zum automatischen Erzeugen von aufeinander folgenden Sätzen von Ausgabebilddaten (70) aus aufeinander folgenden Sätzen von Eingabebilddaten (50),
- wobei jeder Satz von Eingabebilddaten (50) ein Mikroskopbild darstellt,
- wobei jeder Satz von Ausgabebilddaten (70) ein Mikroskopbild darstellt,
• wobei sich die Zahl von aufeinander folgenden Sätzen von Eingabebilddaten (50), die zum Erzeugen von aufeinander folgenden der Sätze von Ausgabebilddaten (70) verwendet werden, automatisch ändert, wenn
- sich wenigstens zwei aufeinander folgende Sätze von Eingabebilddaten (50) um eine Menge ändern, die unterhalb einer Schwelle liegt, und
• wobei als die Schwelle für das automatische Ändern eine absolute Schwelle durch Verwenden eines Referenzsatzes von Bilddaten (50, 60) verwendet wird.

15. Mikroskopierverfahren (100) nach Anspruch 14, wobei das Mikroskopierverfahren (100) das Überwachen von Stellgliedern des Mikroskops (2) und/oder Peripheriegeräten des Mikroskops (2) umfasst.

16. Mikroskopierverfahren (100) nach Anspruch 14 oder 15, wobei der Referenzsatz durch Definieren eines Referenzsatzes jede vorbestimmte Zahl von aufeinander folgenden Bildern oder nach Verstreichen eines definierten Zeitraums zeitlich variierend ist.

17. Computermedium, umfassend Software zum Ausführen des Verfahrens nach einem der Ansprüche 14 bis 16.

## Revendications

1. Dispositif de commande d'image microscopique (1) destiné à un microscope (2) le dispositif de commande d'image microscopique (1) comprenant :
• une section d'entrée (3) conçue pour recevoir au moins :
- des jeux consécutifs de données d'image d'entrée (50), chaque jeu représentant une image microscopique,
• une section de sortie (4) destinée à délivrer en sortie des jeux de données d'image de sortie (70), chaque jeu représentant une image microscopique,
où le dispositif de commande d'image microscopique (1) est conçu pour basculer automatiquement d'un premier mode de traitement d'image (110) à un second mode de traitement d'image (120) si la quantité de changement entre au moins deux jeux consécutifs de données d'image d'entrée (50) se trouve en dessous d'un seuil, et
où, dans le second mode de traitement d'image (120), les jeux de données d'image de sortie (70) sont fondés sur un nombre plus grand de jeux consécutifs de données d'image d'entrée (50) que dans le premier mode de traitement d'image (110), et
• où, un seuil absolu est utilisé en tant que seuil en utilisant un jeu de référence de données d'image (50, 60) .

2. Dispositif de commande d'image microscopique (1) selon la revendication 1, où le dispositif de commande d'image microscopique (1) est conçu pour basculer du second mode de traitement d'image (120) au premier mode de traitement d'image (110) en fonction de la quantité de changement entre au moins l'un parmi :
- au moins deux jeux consécutifs de données d'image d'entrée (50) et/ou
- au moins deux données consécutives de réglages (60) où
les données consécutives de réglage (60) représentent au moins un paramètre de configuration variable du microscope (2) .

3. Dispositif de commande d'image microscopique (1) selon la revendication 2, dans lequel les critères de calcul pour le basculement du premier mode de traitement d'image (110) au second mode de traitement d'image (120) diffèrent de critères de calcul pour le basculement du second mode de traitement d'image (120) au premier mode de traitement d'image (110).

4. Dispositif de commande d'image microscopique (1) selon l'une des revendications 1 à 3, dans lequel la quantité de changement entre des jeux consécutifs de données d'image d'entrée (50) est calculée grâce à un algorithme de traitement d'image.

5. Dispositif de commande d'image microscopique (1) selon la revendication 2, dans lequel, pour basculer du second mode de traitement d'image au premier mode de traitement d'image, la quantité de changement doit dépasser un seuil programmé.

6. Dispositif de commande d'image microscopique (1) selon l'une des revendications 1 à 5, dans lequel le premier mode de traitement d'image (110) est un mode d'image unique, en particulier un mode vidéo en direct, en particulier avec au moins 25 trames par seconde.

7. Dispositif de commande d'image microscopique (1) selon l'une des revendications 1 à 6, dans lequel, dans le second mode de traitement d'image (120), un procédé de traitement multi images est utilisé.

8. Dispositif de commande d'image microscopique (1) selon l'une des revendications 1 à 7, dans lequel la section d'entrée (3) et/ou la section de sortie (4) sont des composants matériels en particulier des ports ou des fiches.

9. Dispositif de commande d'image microscopique (1) selon l'une des revendications 1 à 8, dans lequel le jeu de référence varie dans le temps en définissant un jeu de référence pour chaque nombre prédéterminé d'images consécutives et/ou des données de réglages ou après qu'un intervalle défini de temps s'est écoulé.

10. Microscope (2) comprenant :
• un dispositif de commande d'image microscopique (1) conforme à l'une des revendications 1 à 9,
• un afficheur (7) permettant d'afficher des jeux consécutifs de données d'affichage (71), chaque jeu représentant une image microscopique,
• un appareil de prise de vues (5) destiné à fournir des jeux consécutifs de données d'image d'entrée (50), chaque jeu représentant une image microscopique, et en plus en option :
- au moins un dispositif de détection (6) destiné à acquérir des données suivantes de réglage (60) représentant au moins un paramètre de configuration variable (61) du microscope (2).

11. Microscope (2) selon la revendication 10, dans lequel, dans le second mode de traitement d'image (120), le microscope (2) est conçu pour fournir automatiquement des jeux consécutifs de données d'image d'entrée (50), au moins l'un des jeux consécutifs de données d'image d'entrée (50) étant généré avec au moins un paramètre de configuration (61) qui varie par rapport à au moins un autre des jeux consécutifs de données d'image d'entrée (50).

12. Microscope (2) selon la revendication 10 ou la revendication 11, dans lequel un débit de présentation de contenu permettant d'afficher des données d'image de sortie (70) sur l'afficheur (7) est plus faible dans le second mode de traitement d'image (120) que dans le premier mode de traitement d'image (110).

13. Dispositif de commande d'image microscopique (1) selon l'une des revendications 10 à 12, comprenant un premier et un second appareil de prise de vues (7), le premier appareil de prise de vues (7) étant utilisé pour le premier mode de traitement d'image (110) et le second appareil de prise de vues (7) étant utilisé pour le second mode de traitement d'image (120).

14. Procédé de microscopie (100) permettant de générer automatiquement des jeux consécutifs de données d'image de sortie (70) à partir de jeux consécutifs de données d'image d'entrée (50),
- chaque jeu de données d'image d'entrée (50) représentant une image microscopique,
- chaque jeu de données d'image de sortie (70) représentant une image microscopique,
• dans lequel le nombre de jeux consécutifs de données d'image d'entrée (50) utilisés pour générer les éléments consécutifs des jeux de données d'image de sortie (70) change automatiquement si
- au moins deux jeux consécutif de données d'image d'entrée (50) changent d'une quantité qui se trouve en dessous d'un seuil, et
• dans lequel un seuil absolu est utilisé en tant que seuil pour le changement automatique en utilisant un jeu de référence de données d'image (50, 60).

15. Procédé de microscopie (100) selon la revendication 14, le procédé de microscopie (100) comprenant la surveillance d'actionneurs du microscope (2) et/ou de dispositifs périphériques du microscope (2).

16. Procédé de microscopie (100) selon la revendication 14 ou la revendication 15, dans lequel le jeu de référence varie dans le temps en définissant un jeu de référence pour chaque nombre prédéterminé d'images consécutives ou après qu'un intervalle de temps défini s'est écoulé.

17. Support informatique comprenant un logiciel permettant d'effectuer le procédé conforme à l'une des revendications 14 à 16.
